# EUROPEAN PATENT APPLICATION

(11) **EP 4 186 742 A1**
(43) Date of publication of application: **31.05.2023**
(21) Application number: 21210375.8
(22) Date of filing: 25.11.2021
(51) Int. Cl.: B60L 53/16, B60L 53/18, H01R 12/70, H01R 13/04, H01R 24/00

(54) **EV CHARGING CONNECTOR WITH THERMAL INERTIA AND METHOD**

(71) Applicant: ABB E-mobility B.V., 2629 JG Delft (NL)
(72) Inventor: GARCIA-FERRE, Francisco, 5400 Baden (CH); TOMBELLI, Fabio, 2291ZJ Wateringen (NL)
(74) Representative: Maiwald GmbH

(57) **Abstract**

The invention relates to an EV (Electrical Vehicle) charging connector (100) comprising a contact element (102), wherein the contact element (102) is configured to receive a charging cable and to provide an interface to a vehicle charging socket, and a thermal mass element (105), wherein the thermal mass element (105) is thermally connected to the contact element (102) and configured to receive heat from the contact element (102).

## Description

### Technical Field

The invention relates to an EV (Electric Vehicle) charging connector, a method for reducing a charging time for charging an electric vehicle, a method for manufacturing a charging connector comprising a contact element and a thermal mass element, and a use of a thermal mass element in a charging connector.

### Background

The charging time for charging an electric vehicle depends, besides of other factors, on the temperature of the contacts of the charging connector. Conventionally, the contacts are cooled actively or passively so that the heat is dissipated into the ambient air.

### Summary of the invention

There may be a desire to improve an EV charging connector with respect to charging time.

The problem is solved by the subject-matter of the independent claims. Embodiments are provided by the dependent claims, the following description and the accompanying figures.

The described embodiments similarly pertain to the EV (Electric Vehicle) charging connector, the method for reducing a charging time for charging an electric vehicle, the method for manufacturing a charging connector comprising a contact element and a thermal mass element, and the use of a thermal mass element in a charging connector. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, an EV charging connector is provided. The charging connector comprises a contact element and a thermal mass element. The contact element is configured to receive a charging cable and to provide an interface to a vehicle charging socket. The thermal mass element is thermally connected to the contact element and configured to receive heat from the contact element.

The contact element inside the charging connector may comprise a compartment for one or more contacts that connect the cable carrying the charge current from the charging station with the corresponding contact of the car inlet. The contact element receives the contact pins of the vehicle inlet or vice versa. That is, the male contact may be in the vehicle inlet and the female contact in the connector or vice versa. The contact element may be galvanically connected to the contacts or insulated, and holds the contacts. The contact element, however, may optionally be integral with the contacts.

The thermal mass element is a passive cooling device. Further cooling devices, in particular active cooling devices for providing an air stream or liquid cooling, may be used in addition to the presented thermal mass element; however, such active cooling devices are out of scope of this disclosure.

Conventionally, heat is just dissipating in the connector structure. Alternatively, passive cooling using heat pipes and a condenser can be applied where the heat is transferred, e.g. via a heat pipe or heat conductors in general to a heat radiating structure at a place where the heat can be radiated to the air, preferably to the ambient air. Since heat transfer and dissipation should be fast, good heat transport device such as above-mentioned heat pipes or heat conductors are required. The heat pipe (or other heat conductors for this purpose) are optimized with respect to their heat conductivity characteristics. Hereby, thermal mass plays no role. For example, heat pipes transport the heat by vapor, i.e. there is a real flow of material carrying the heat. The same applies for cooling liquids that are transported along the cable from and to the charging station. Conventional passive cooling elements, e.g. elements having cooling rips or fins, try to maximize the surface for best radiation. However, by maximizing the surface, space is lost. The space is lost for two reasons: firsts, the geometry is space consuming and second, in order to be efficient, air, i.e. free space has to surround the surfaces. Since the air is also a thermal insulator, the time until the heat dissipation becomes effective takes a relatively long time and the heat saturation of the conventional cooling elements is reached relatively fast. Thus, the heat rises fast in the first phase but is dissipated only slowly, leading to a high temperature in a short time period.

This means, with conventional cooling, firstly, the volume of the cooling parts are designed to transport the heat fast so that the massive volume and the thermal mass have to be relatively low. Secondly, the massive volume cannot be high since the area of the surface has to be high and formed such that the heat can be radiated to the air near the surfaces. That is, air gaps between the surfaces have to be large enough. This effects a reduction of thermal mass and is aimed for cooling the contact element in the long term.

The thermal mass element of the presented charging connector, however, aims at receiving as much as possible thermal energy in the first phase of the charging session, where the first phase has the characteristic that a high charging current can flow since the temperature at the contact elements is still low and the battery state is nearly "empty". Due to the high current, the first phase is the most heat-producing phase at the contact element.

According to an embodiment, the EV charging connector further comprises an external housing that encloses the contact element and the thermal mass element, wherein the thermal mass element has a maximum thermal inertia constraint by the external housing.

That is, the thermal mass element may be shaped to have the greatest possible inertia. A limitation of the mass and hence a limitation of the inertia is represented by the space, i.e., the volume and the geometry of the external housing. Further constraints are described in the following.

According to an embodiment, the maximum inertia is a compromise between capacity, volume and weight, wherein the volume is limited by the maximum available space inside the external housing of the connector and the weight is limited by a maximum pre-defined weight.

For receiving as much thermal energy as possible, the thermal mass element has to be massive, and the massive volume has to be maximized. This volume is limited by available space inside the external housing or casing of the charging connector, the weight because of user-friendliness, and further constraints. Therefore, the optimization takes also the material into account, which is a compromise between heat capacity per volume unit of the material, volume and weight. That is, the focus lies on the total heat capacity, in contrast to conventional heat dissipation elements, where the focus lies on heat conductivity and dissipation.

The compromise is a result of a function for the thermal inertia i_th_max = max f(capacity, volume, weight), where the volume and the weight are limited as indicated above, and the capacity depends on the material. There may be further constraints such as costs, mechanical items such as mechanical stability, etc.

This means, compared to a heat dissipating device that is maximized with respect to its surface, such that a maximum amount of heat is radiated to the ambient, and a location where the heat dissipation has best effect, the thermal inertia of the thermal mass element is maximized within the above-mentioned constraints so that it can receive as much as possible heat within the given constraints. Regarding the location, the thermal mass element has to be arranged near the contact element.

According to an embodiment, the mass element is attached to the contact element.

The thermal mass element may be a separate element attached to the contact element for receiving the heat. In this case, the contact element and the thermal mass may consist of the same material or of different materials. For example, the material of the contact element is made of copper and the material of the thermal mass element is a ceramic material. Each of the elements can be optimized for itself and standard products, e.g. from the market or from an existing production line, can be used.

According to an embodiment, the thermal mass element and the contact element are one integral element.

This embodiment is an alternative embodiment to the previous one. In this case, the thermal mass element and the contact element consist of the same material, e.g., copper, and can be manufactured in one step. Further, no additional manufacturing steps for the charging connector for attaching the thermal mass element to the contact element is required. Moreover, there is no resistance for the heat transfer from the contact element to the thermal mass.

According to an embodiment, the external housing is filled with a heat conducting material connected to the thermal mass element.

The heat conducting material conducts the heat from thermal mass element in direction to the housing. It may also be connected with the housing. The connector may be filled completely or partly with the material. It may further have non-massive structure that reduces the weight with respect to a massive structure on one side, and which nevertheless transports the heat effectively towards the exterior of the connector where the heat is dissipated to the ambient air.

According to an embodiment, the heat conducting material has a heat conductivity between the material of the thermal mass element and air.

The space inside the connector housing may be filled with a high thermal conductivity material different from air and different from the material of the thermal mass element. For example, the material may be a ceramic-filled epoxy.

The material of the housing is usually made of plastic. The heat transport to the ambient air, e.g. through the filling material and the plastic housing may be supported by using a plastic with high thermal conductivity. The housing may be made of different plastic materials such that there are "normal" zones with lower thermal conductivity to which a user may come into contact and hotter zones with higher thermal conductivity with which a user does not come into contact.

According to an embodiment, the thermal mass element has fins for heat dissipation.

In this disclosure, the terms "fins" and "fin element" are used interchangeably. The fins may be part of a fin element comprising a body and the fins. For example, the body consists of a pipe-like structure at which several panels spaced from each other are arranged.

The process of reducing heat in the connection element can be divided into two phases, which have a smooth transition. In the first phase, the main effect is the reception of the heat from the contact element in the thermal mass element. At the beginning of this phase, there is no heat dissipation to the ambient air. In the course of time, the heat reaches the surface of the mass element where gradually more and more heat is radiated, although this heat radiation is not the actual purpose of the element. In the second phase, heat radiation predominates. In the course of the second phase, the element can finally only absorb as much heat as it emits. However, since it is convenient to remove the heat from the heat storage element, i.e. the thermal mass element, in order to use the freed capacity for a further heat supply from the contact element, it is proposed to connect the thermal mass element to a cooling element, such as fins or an element with fins. The cooling element serves to radiate heat into the ambient air and therefore has as large a surface area as possible, which is realized, for example, by the cooling fins. The body is created in such a way that it conducts as large a quantity of heat as possible to the surface.

The thermal mass element arrangement according to this embodiment allows for combining inertia and heat dissipation. That is, heat dissipation is achieved as an additional effect. In this case, the volume thus has an additional limitation, as the fins require free space. Nevertheless, with this arrangement, both effects are available. The cooling arrangement consisting of thermal mass element with fins can be designed such that the time period until the limit of the pre-defined temperature reaches a minimum specified value at maximum current in the first phase is extended, and the temperature can be kept below a second value in the second phase. Therefore, also in the second phase, acceptable charging current values can be achieved. The overall charging time is significantly lower than with conventional cooling elements and may be lower compared to maximizing thermal mass only.

Thus, by using fins, the heat sink is optimized for radiating heat in the second phase, which can be seen as a complementary measure to the absorption of heat by the thermal mass in the first phase.

According to an embodiment, the thermal mass element and the fins are one integral element.

In this case, the thermal mass element and the fins or the fin element, respectively, may be made of the same material and manufactured in one step. Using only one element reduces costs for procurement, logistic and manufacturing. No additional measures for attaching the fins to the thermal mass element are required.

This embodiment covers further arrangements or shapes of the fins. E.g., they may be implemented as grooves at the surface of the solid block, i.e. the thermal mass element. The grooves may be arranged at one or more sides of the thermal mass element. The depth, thickness and location of the grooves may be adapted according to the considerations described herein.

According to an embodiment, the fins are attached to the thermal mass element.

The fins or the fin element, respectively, may be a separate element, which is attached to the thermal mass element. In this way, fins or fin elements available in the market may be used.

According to a further aspect, a method for reducing a charging time for charging an electric vehicle is provided, wherein the method comprises the following steps: In a first step, a charging connector is provided, wherein the charging connector comprises a contact element and a thermal mass element as described herein. In a second step, a battery of a vehicle is charged using the charging connector, wherein a charging current is provided at a maximum rating value until the contact element has reached a pre-defined temperature.

Using the herein described charging connector shifts the point of time when the pre-defined temperature is reached so that the period in which the maximum allowed or specified current in the charging procedure can be provided to the battery of a vehicle is increased. The pre-defined temperature may be a temperature lower than the maximum allowed temperature at the contact element. By applying the method, the charging time is reduced.

According to a further aspect, a method for manufacturing a charging connector comprising a contact element and a thermal mass element as described herein is provided, wherein the method comprises the following steps. In a first step, a charging connector supporting structure, such as for example the external housing, is provided. In a second step, the contact element is attached to the connector supporting structure. Thereby, the contact element is an integral element with the thermal mass element or the thermal mass element is attached to the contact element, i.e. being a separate element.

If the mass element is attached to the contact element, the step of attaching may be carried out before or after attaching the contact element to the connector supporting structure.

According to an embodiment, a use of a thermal mass element in a charging connector as described herein is provided.

These and other features, aspects and advantages of the present invention will become better understood with reference to the accompanying figures and the following description.

### Short Description of the Figures

Fig. 1a shows a diagram of a first example of the EV connector,
Fig. 1b shows a diagram of a second example of the EV connector,
Fig. 2 shows a graph with temperature profiles,
Fig. 3 shows a flow diagram of a method for reducing a charging time for charging a battery of an electric vehicle,
Fig. 4 shows a flow diagram for manufacturing the charging connector,
Figs. 5a, 5b, and 5c show diagrams with different views of a contact geometry on which the examples in the following Figures may be based on,
Figs. 6a, 6b and 6c show diagrams with different views of an example of a contact according to an embodiment,
Figs. 7a, 7b and 7c show diagrams with different views of a further example of a contact according to an embodiment,
Figs. 8a and 8b show diagrams with different views of an example of a contact according to an embodiment,
Figs. 9a and 9b show diagrams with different views of a further example of a contact according to an embodiment,
Figs. 10a and 10b show diagrams with different views of a further example of a contact according to an embodiment.

### Detailed Description of Embodiments

Corresponding parts are provided with the same reference symbols in all figures.

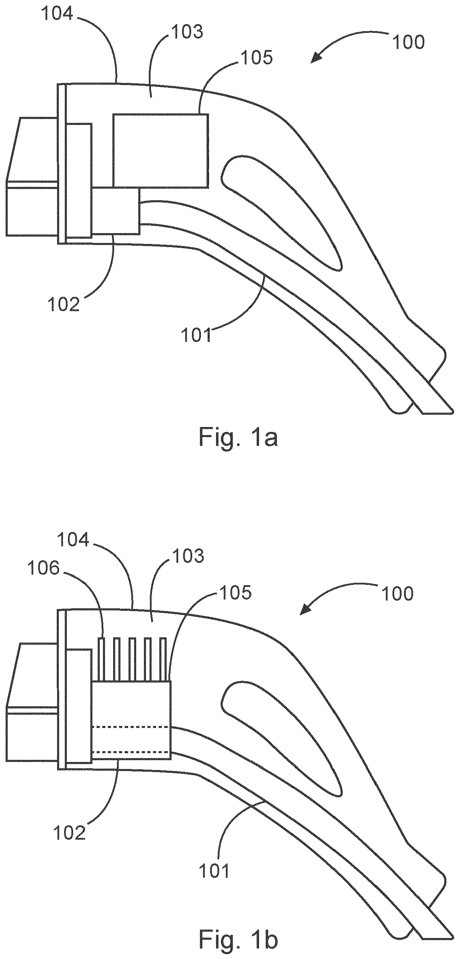

Fig. 1a shows a diagram of an EV charging connector 100. The charging connector 100 is adapted to transfer power from the EV charging infrastructure to the battery of an electric vehicle. During charging, the charging current flows through electrical contacts of the contact element 102, which are typically part of a connector 100. Connector 100 further comprises a cable 101 conducting the charging current from a charging station to the electrical contacts of the contact element 102, and an external enclosure or housing 104 that defines an internal volume 103. The internal volume 103 is empty besides of contact element 102, cable 101, and block 105, which is described below, and hence filled with air. The maximum temperature of at the contact element 102 is limited. This limit is defined, e.g., in standards such as IEC 62196-1. As a consequence, the current that can flow via the electrical contacts of the contact element 102 to the battery of a car has to be reduced when or before reaching this temperature. In particular, the temperature at the contacts 102 should not exceed 90°C or a difference of 50° Kelvin with respect to the ambient temperature, regardless of the actual temperature. For a given connector design, a given ambient temperature, and a given current, the temperature limit at the contact element 102 is reached after a time period T1-T0 in a first charging phase.

The idea of the invention is based on the observation that when the battery state of charge is low, higher currents can be fed into the battery. That is, the first charging phase is the phase where from view of the battery the highest current may flow. Therefore, this charging phase has to be as long as possible. The longer this time period is, the higher is the amount of energy that can be transferred in that time period. The shorter the time, the less energy transferred, meaning that it takes longer to charge a battery.

Therefore, the thermal inertia of the system is increased. By implementing a high thermal inertia, it is possible to flow very high currents in the beginning, and as the contact element 102 heats up, reduce the current to ensure that the limit of 90°C is not exceeded. As a result, a higher amount of energy transferred in a shorter time. A maximization of the thermal inertia of the system is achieved by adding more mass. This can be described as an extension of the contact element into the internal volume 103 of the connector 100 by using a thermal mass element 105. In Fig. 1, the thermal mass element 105 is mechanically and thermally connected to the contact element 102 of the connector. In embodiments, the thermal mass element 105 and the contact element 102 are one piece. The thermal mass element 105 is made e.g., of copper (i.e. same as the contacts), although it could also be made of another thermally conductive material.

Fig. 1b shows an example where the mass element 105 has fins 106. The fins 106 may be for example integral with mass element 105 or attached to the mass element 105 where, for example, the fins 106 have one common body as supporting structure. As shown in the example of Fig. 1b, the contact element 102, the mass element 105 and the fins 106 may be one single, i.e., integral, element.

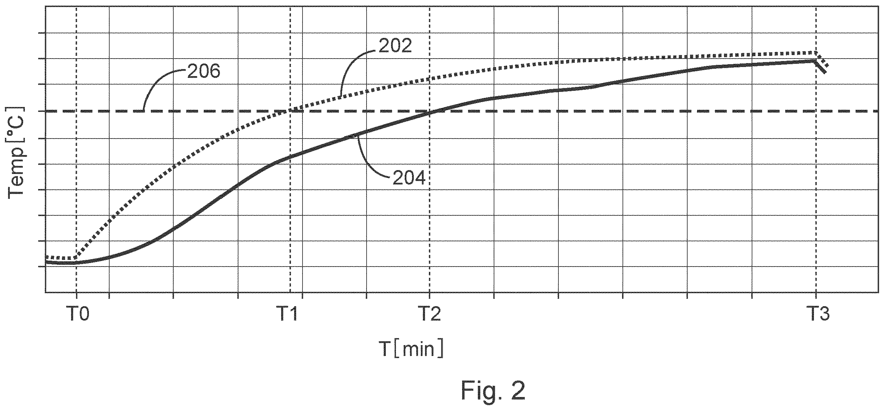

Fig. 2 shows a temperature-over-time diagram with two curves 202, 204. Curve 202 shows the temperature profile at contact element 102 without the thermal mass. Curve 204 shows the temperature profile at contact element 102 when the thermal mass is implemented. Time T0 is the point of time, when the charging current is turned on, and T3 when the charging current is turned off. Line 206 marks the 90°C-limit. Curve 202 has a concave shape with a high temperature raise at the beginning and intersects line 206 at T1 whereas curve 204 has a convex shape at the beginning and the rises linearly. Curve 204 intersects line 206 at T2.

This means that a certain current can be held longer before the temperature limit is reached.

That is, when the connector has an contact element 102 with an additional mass providing increased thermal inertia, the slope is flatter, and it takes a longer time T2-T0 to reach the temperature limit. This allows charging at the desired current for a longer time. Therefore, a higher energy transfer from the charging infrastructure to the battery of the electric vehicle is achieved during a period T3-T0.

When using a heat dissipating element such as fin, the temperature rise in the second phase becomes flatter. The thermal mass element 105 is the main thermal element in a first phase of a charging session and the heat dissipating element 106 is the main thermal element in second phase and after terminating a charging session.

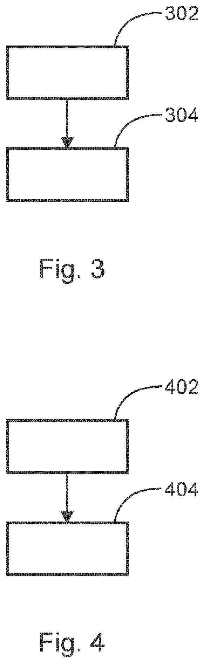

Fig. 3 shows a flow diagram of a method for reducing a charging time for charging a battery of an electric vehicle with a charging connector described herein. The method comprises the following steps. In step 302, a charging connector comprising a contact element and a thermal mass element as described herein is provided. In step 304, a battery of a vehicle is charged. Thereby, the charging current is provided at a maximum rating value until the contact element has reached a pre-defined temperature.

Fig. 4 shows a flow diagram for manufacturing a charging connector comprising a contact element and a thermal mass element as described herein. The method comprises the following steps: In step 402, a charging connector supporting structure is provided. The charging connector supporting structure may be the external housing 104 and/or further parts required to mount the contact element inside the external housing 104. In step 404, the contact element is attached to the connector supporting structure. Thereby, either the contact element 102 is an integral element with the thermal mass element 105 or the thermal mass element 105 is attached to the contact element 102. In the latter case, the thermal mass element 105 may be attached before or after attaching the contact element 102 to the connector supporting structure.

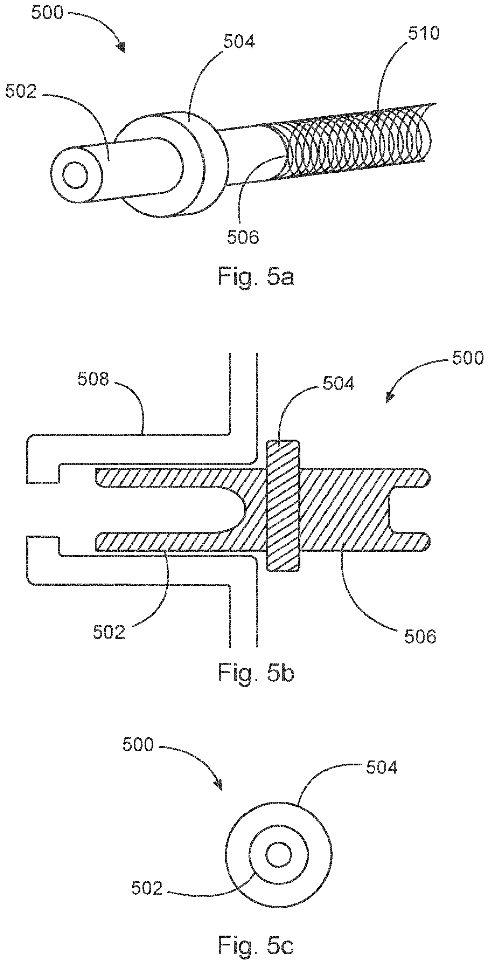

Figs. 5a, 5b, and 5c show diagrams with different views of a contact geometry on which the examples in the following figures may be based on. The contact is also referred to as "pin" and may be a male or a female contact. Fig. 5a shows a 3D-view, Fig. 5b a cut in a side view and Fig. 5c a front view of the contact 500. This scheme of numbering of the figures applies also to the further following examples and figures. The reference numbers in all of the following examples and figures denote the same parts of the contact and thus are not described repeatedly in each figure.

Fig. 5a shows the front part 502 of the pin where the contact occurs when connecting to the counter part of the vehicle. The figure shows further a cylindrical plate 504 that has the function to avoid that the pin moves, and the back part 506 at which an insulated Cu wire 510 is crimped to. Fig 5b further shows a part of the interface of the mating interface 508 that encloses the front part 502 of the contact 500 and which represents the front face to the connector. The thermal mass elements 605, 705, 805, 905, and 1005 in the following figures are embodiments of the thermal mass element 105 shown in Fig. 1a, although in Fig. 1a the thermal mass element 105 is arranged at the contact element 102. The contact element 102 may be therefore defined as being the contact 500 or the contact 500 with housing.

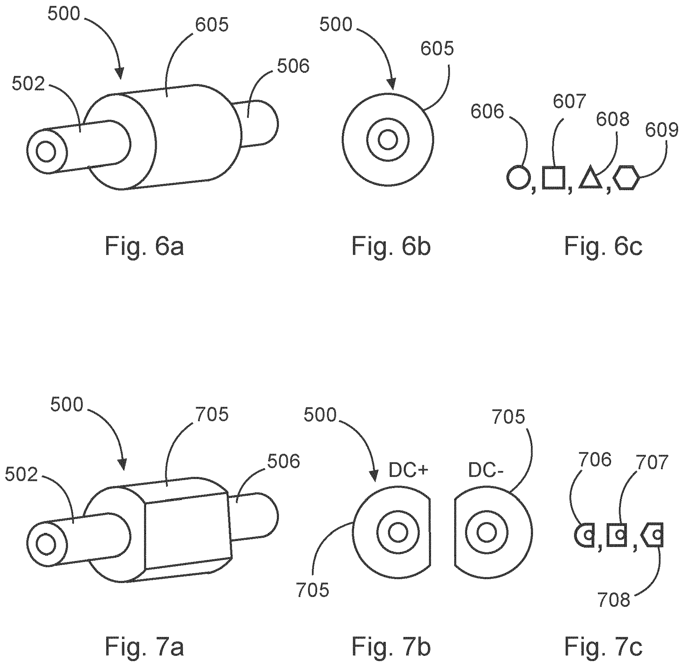

Fig. 6a shows a 3D-view and Fig. 6b a cut in a side view of an example of a contact 500 according to an embodiment. The contact 500 comprises again the front part 502, the plate 504, and the back part 506. Instead of a plate, a cylindrical thermal mass element is arranged enclosing or thickening the middle part of the contact pin and providing the thermal inertia according to the invention.

Fig. 6c shows front views of further shapes of the thermal mass element, which may be, for example, annular 606, rectangular 607, triangular 608 or polygonal 609.

Figs. 7a, 7b and 7c show diagrams in different views of a further example of a contact 500 according to an embodiment, where the thermal mass element is similar to that of Figs. 6a, 6b, however with the difference that the cylinder has a flat side. This shape allows ensuring a sufficient distance between DC+ and DC-. Fig. 7c shows front views of further shapes of the thermal mass element, which may be, for example, a half circle 706, rectangular 707 or polygonal 708.

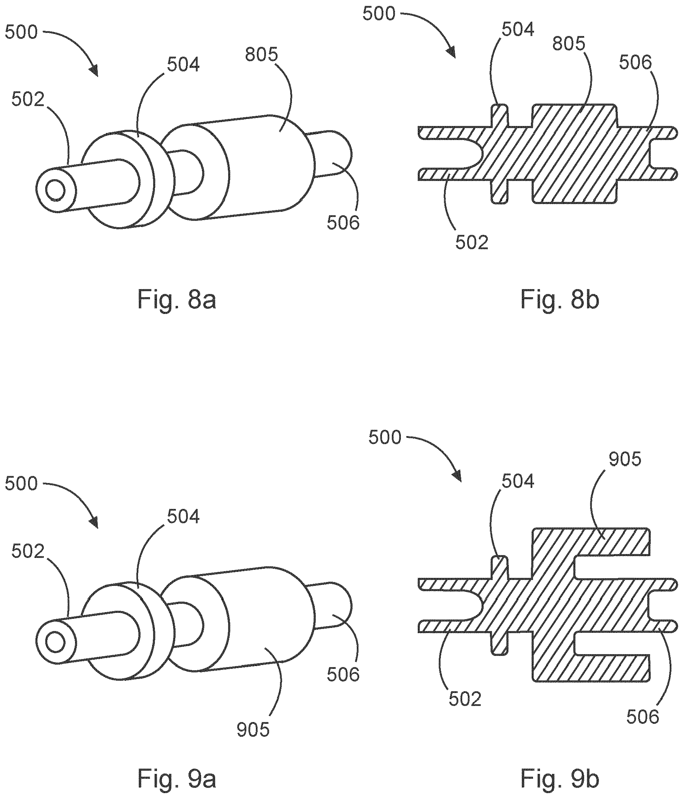

Figs. 8a and 8b show diagrams with different views of a further example of a contact 500 according to an embodiment. The arrangement is similar to that of the previous example; however, the thermal mass element 805 is shorter such that there is place for arranging plate 504 as shown in Figs. 5a and 5b.

Figs. 9a and 9b show diagrams with different views of a further example of a contact 500 according to an embodiment. In this example, the cylindrical thermal mass element 905 has a hollow part at one side of the cylinder such that there is free space between the pin and the thermal mass element 905 at this part of the cylinder. This free space may contribute to the heat dissipation in the second phase.

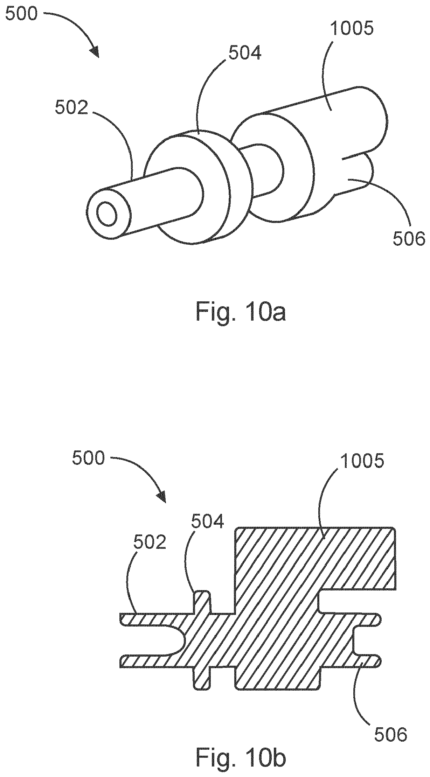

Figs. 10a and 10b show diagrams with different views of a further example of a contact 500 according to an embodiment, where the thermal mass element 1005 is asymmetric and has an extrusion on one side of the cylinder parallel to the pin.

In principle, any thermal mass element shape would be possible.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### Reference Numerals

- 100: EV charging connector
- 101: charging cable
- 102: contact element
- 103: free space inside external housing
- 104: external housing
- 106: fins
- 202: temperature profile without thermal mass element
- 204: temperature profile with thermal mass element
- 206: line of temperature limit
- 302: first step of the method for reducing a charging time
- 304: second step of the method for reducing a charging time
- 402: first step of the method for manufacturing a charging connector
- 404: second step of the method for manufacturing a charging connector
- 500: contact
- 502: front part of the contact
- 504: plate of the contact
- 506: back part of the contact
- 605: example of a thermal mass element
- 606: annular shape of the thermal mass element
- 607: rectangular of the thermal mass element
- 608: triangular shape of the thermal mass element
- 609: polygonal shape of the thermal mass element
- 705: example of a thermal mass element
- 706: half circle shape of the thermal mass element
- 707: rectangular of the thermal mass element
- 708: polygonal shape of the thermal mass element
- 805: example of a thermal mass element
- 905: example of a thermal mass element
- 1005: example of a thermal mass element

## Claims

1. EV, Electric Vehicle, charging connector (100) comprising
a contact element (102), wherein the contact element (102) is configured to receive a charging cable and to provide an interface to a vehicle charging socket;
a thermal mass element (105), wherein the thermal mass element (105) is thermally connected to the contact element (102) and configured to receive heat from the contact element (102).

2. EV charging connector (100) according to claim 1, further comprising an external housing that encloses the contact element (102) and the thermal mass element (105), wherein the thermal mass element (105) has a maximum thermal inertia constraint by the external housing (104).

3. EV charging connector (100) according to claim 2, wherein the maximum thermal inertia is a compromise between heat storage capacity, volume and weight, wherein the volume is limited by the maximum available space inside the external housing of the connector and the weight is limited by a maximum pre-defined weight.

4. EV charging connector (100) according to any one of the previous claims, wherein the thermal mass element (105) is attached to the contact element (102).

5. EV charging connector (100) according to any one of claims 1 to 3, wherein the thermal mass element (105) and the contact element (102) are one integral element.

6. EV charging connector (100) according to any one of the previous claims, wherein the external housing is filled with a heat conducting material connected to the thermal mass element.

7. EV charging connector (100) according to claim 6, wherein the heat conducting material has a heat conductivity between the material of the thermal mass element and air.

8. EV charging connector (100) according to any one of the previous claims, wherein the thermal mass element (105) has fins (106) for heat dissipation.

9. EV charging connector (100) according to any one of the previous claims, the thermal mass element (105) and the fins (106) are one integral element.

10. EV charging connector (100) according to claims 1 to 8, the fins (106) are attached to the thermal mass element (105).

11. Method for reducing a charging time for charging an electric vehicle wherein the method comprises the following steps:
providing (302) a charging connector comprising a contact element (102) and a thermal mass element (105) according to any one of the previous claims;
charging (304) a battery of a vehicle using the charging connector (100); wherein a charging current is provided at a maximum rating value until the contact element (102) has reached a pre-defined temperature.

12. Method for manufacturing a charging connector comprising a contact element (102) and a thermal mass element (105) according to any one of claims 1 to 10, wherein the method comprises the following steps:
providing (402) a charging connector supporting structure;
attaching (404) the contact element (102) to the connector supporting structure;
wherein the contact element (102) is an integral element with the thermal mass element (105) or the thermal mass element (105) is attached to the contact element (102).

13. Use of a thermal mass element (105) in a charging connector according to any one of claims 1 to 10.
